# EUROPEAN PATENT APPLICATION

(11) **EP 4 012 903 A1**
(43) Date of publication of application: **15.06.2022**
(21) Application number: 20212904.5
(22) Date of filing: 09.12.2020
(51) Int. Cl.: H02K 15/02

(54) **METHOD AND APPARATUS FOR PRODUCING A STATOR OF A DYNAMO-ELECTRIC MACHINE**

(71) Applicant: ATOP S.p.A., 50021 Barberino Val d'Elsa (Firenze) (IT)
(72) Inventor: PONZIO, Massimo, 53034 Colle Val D'Elsa (IT); MANUELLI, Giovanni, 50012 Ponte a Ema, Bagno a Ripoli (IT); MARCHI, Alessandro, 50026 San Casciano in Val di Pesa (IT)
(74) Representative: ABM Agenzia Brevetti & Marchi

(57) **Abstract**

Method and apparatus for producing a stator of a dynamoelectric machine by assembling together a plurality of pole members (10a, 10i, 10n) wound by a wire (W) forming respective coils (B). The method comprises the steps of moving along a predetermined rectilinear trajectory (101) a train of poles (5) arranged according to a predetermined starting spatial orientation. At a predetermined passage position (P*) a first pole member (10a) and a plurality of intermediate pole members (10i), at a time, passes from the rectilinear trajectory (101) to a circular trajectory (102) having a centre (C). The train of poles is, then, closed positioning a last pole member (10n) of the train (5) along the circular trajectory (102) adjacent to the first pole member (10a) and to the last intermediate pole member (10n-1) changing, at a change position (Pc) its spatial orientation from the predetermined starting spatial orientation to a final spatial orientation in which it is radially oriented with respect to the centre (C) of the circular trajectory (102)

## Description

### Field of the invention

The present invention relates to a method for producing a stator of a dynamo-electric machine.

In particular the invention relates to a method for producing an annular stator by assembling together a plurality of pole members wound by an electric wire W for forming respective coils B.

Furthermore, the invention relates to an apparatus for producing an annular stator of a dynamoelectric machine by assembling together a plurality of pole members wound by an electric wire W for forming respective coils B.

### Description of the prior art

As it is known, after winding, the pole members are assembled together one next to the other to form a wound core, which is normally a stator component of an electric motor having the field of the pole members directed internally. During winding of the pole members, a predetermined number of turns of electric wire needs to be delivered and positioned with accuracy to form the coils. The turns of the coils need to be stratified with a required position precision, and the conductor stretches which form the turns need to be regularly positioned.

Furthermore, continuous wire stretches, often referred to as connections leads or connection bridges, can connect one or more pairs of the coils of the pole members to form a required electric scheme of the stator component.

Winding and assembly of pole members according to these principles are for example described in EP 1098425 and EP 1629588, EP3008798. In EP 1098425 pliers are provided for holding the pole members. Each plier is moveable on a respective movement device of a transfer table to position the pole members for winding and assembly of a stator. The pole members are secured to the pliers by catches that are assembled on the pliers. Each plier is provided with a shelf for abutment of the lower end of a pole member. EP 3008798 illustrates a holder where single poles are positioned for winding and connection leads are disposed for connecting the coils.

A method for producing an annular stator by assembling together wound poles is also described in US9882457. More in detail, the method for producing annular stators described in US9882457 provides to insert a plurality of wound poles into a curvilinear slot of a device for moving a row of poles members into an annular assembly of a stator. The curvilinear slot has a cross-sectional shape that corresponds to the cross-sectional shape of a wound pole member and comprises a rectilinear insertion section, a spiral transition section and an annular section. The row of poles positioned in the rectilinear insertion section is pushed through the section of the curvilinear path into the annular section where an end position is reached in which the row of poles forms the annular configuration. The poles are then removed from the annular section using a gripping device and held together in a pressed state.

However, the method for assembling an annular stator described in US9882457 presents notable complications in guaranteeing the positioning of the poles members by pushing through a slot, which needs to assure accuracy by the engagement of the pole members with the sides of the slot.

When connection leads are required between the poles, like is shown with the holder of EP 3008798, or with connection leads having different connection paths, the assembly of the pole members to form the angular configuration of the stator requires transferring the assembled pole members together with the connection leads to achieve the assembly of the pole members. This transfer becomes a complicated operation in achieving accurate final positioning of the pole members and the connections leads.

### Summary of the invention

It is, therefore, an object of the present invention to provide a method for producing a stator of a dynamo-electric machine by assembling together a plurality of wound poles that is able to overcome the aforementioned drawbacks of the machines of prior art.

It is also an object of the present invention to provide a method for producing a stator of a dynamo-electric machine that allows to simplify and speed-up the assembly operations and at the same time to guarantee a very accurate positioning of the poles forming the stator and of the connection leads that may be present between the poles.

It is also an object of the present invention to provide a method for producing a stator of a dynamo-electric machine that achieves assembly operations of the pole members in respective positions of an annular configuration of a stator, and at the same time guarantees that the connection leads of the pole members are positioned on predetermined trajectories proximal to an end of the assembled stator.

In particular it is an object of the present invention to provide a method for producing a stator of a dynamo-electric machine that allows to avoid excessive bending of the portions of the connection leads present between the poles, thus assuring the correct assembly and functioning of the dynamoelectric machine comprising such a stator.

It is also an object of the present invention to provide a method for producing a stator of a dynamo-electric machine that allows to avoid the need of excessive lengths of the portions of the connection leads present between the poles, thus achieving compactness of the stator and avoiding difficulties in positioning the connection leads.

It is a further object of the present invention to provide an apparatus for producing a stator of a dynamo-electric machine by assembling together a plurality of wound poles having analogous advantages.

These and other objects are achieved by the method, according to the invention, for producing a stator of a dynamo-electric machine by assembling together a plurality of pole members wound by a wire (W) forming respective coils (B), said method comprising the steps of:
- moving along a predetermined rectilinear trajectory a train of pole members comprising said plurality of poles positioned side by side, said train of poles comprising a first pole, a last pole, and a predetermined number of intermediate poles positioned between said first and said last poles, during said step of moving along the predetermined rectilinear trajectory each pole member being arranged with a respective longitudinal axis positioned according to a predetermined starting spatial orientation;
- passing at a predetermined passage position P* the first pole member and the plurality of pole members from the rectilinear trajectory to a circular trajectory having a centre (C), at said predetermined passage position P* the longitudinal axes of the first pole member and the intermediate pole members being directed towards the centre (C) of the circular trajectory;
- moving said the first pole member and the intermediate pole members along said circular trajectory, during said step of moving along the circular trajectory, the longitudinal axes of the first pole member and the intermediate pole members being directed towards the centre of said circular trajectory;
- closing said train of poles positioning all the pole members of said train of poles along said circular trajectory with said last pole member adjacent to said first pole member and to the intermediate pole member of the train of poles which precedes the last pole member; said step of closing being carried out by changing, starting from a change point (Pc) of said rectilinear trajectory positioned upstream of said passage position, the spatial orientation of the last pole of said train of poles from said predetermined starting spatial orientation to a final spatial orientation in which it is radially oriented with respect to the centre (C) of the circular trajectory.

According to another aspect of the invention, an apparatus for producing a stator of a dynamo-electric machine by assembling together a plurality of pole members wound by a wire (W) forming respective coils (B), said apparatus comprising:
- a first displacement device configured to move along a predetermined rectilinear trajectory a train of pole members comprising said plurality of pole members positioned side by side, said train of pole members comprising a first pole member, a last pole member, and a predetermined number of intermediate pole members supported on respective support members, the pole members of the train of pole members being positioned with a predetermined starting spatial orientation;
- a second displacement device configured to cause, at a predetermined passage position (P*), a pole member at a time supported by a respective support member to move from said predetermined rectilinear trajectory to a predetermined circular trajectory having a centre (C), wherein at the predetermined passage position P* the predetermined starting spatial orientation of the pole members coincides with a radial direction with respect to the centre C of the circular trajectory, and wherein said second displacement device is configured to move said plurality of support members along said circular trajectory maintaining said pole members directed towards the centre C of the circular trajectory;
whose main characteristic is that a device is, furthermore, provided for changing the spatial orientation of the last pole member supported on the last support member starting from a point positioned upstream of said passage position P*, from the predetermined starting spatial orientation to a final spatial orientation in which the last pole member is positioned on the circular trajectory directed towards the centre (C) of the circular trajectory in such a way to close the train of poles by positioning the last support member adjacent to the first support member and to the previous support member.

Other features of the present invention and related embodiments are set out in the dependent claims.

### Brief description of the drawings

The invention will now be shown with the following description of its exemplary embodiments, exemplifying but not limitative, with reference to the attached drawings in which:
- Figures 1 and 2 diagrammatically show, respectively, a front perspective view and a rear perspective view of an embodiment, according to the invention, of an apparatus for producing a stator by assembling together a plurality of pole members;
- Figures 3 and 4A diagrammatically show, respectively, a front perspective view and a rear perspective view of a train of pole members that can be processed by the apparatus of figures 1 and 2;
- Figure 4B diagrammatically shows an enlargement of a portion of figure 4A to highlight some characteristics of an embodiment of the train of poles processed by the apparatus according to the invention;
- Figure 5 diagrammatically shows a sequence of difference positions occupied by an intermediate support member of the train of pole members of figures 3 and 4 during the functioning of the apparatus of figures 1 and 2;
- Figure 6 diagrammatically shows a sequence of different positions occupied by the last support member of the train of pole members of figures 3 and 4 during the functioning of the apparatus of figures 1 and 2;
- Figure 7 diagrammatically shows a sequence of two different positions occupied by the first support member of the train of pole members during the functioning of the apparatus of figures 1 and 2;

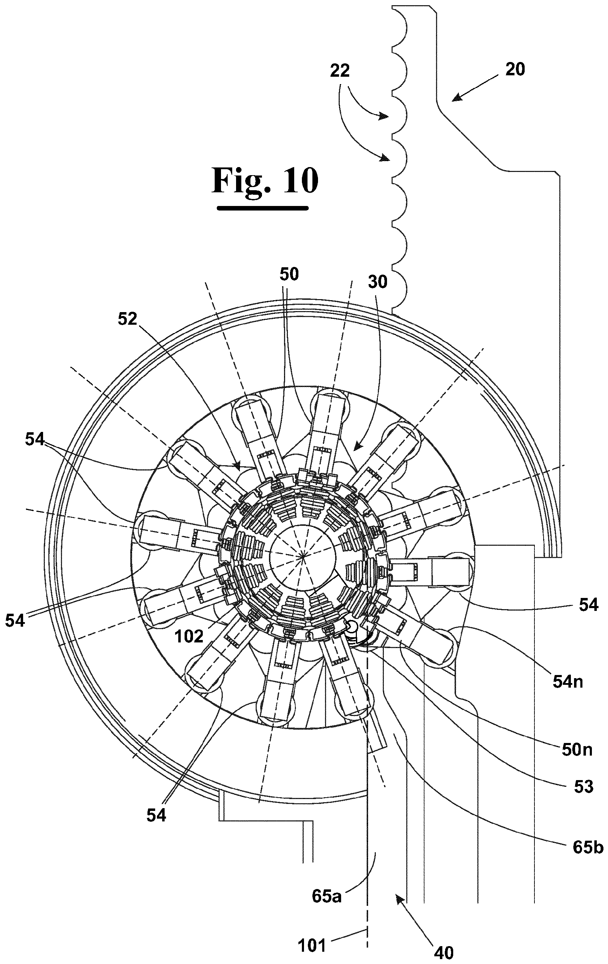

- Figures 8 to 11A diagrammatically show a sequence of different positions occupied by the train of pole members during the functioning of the apparatus of figures 1 and 2;
- Figure 11B diagrammatically shows an enlargement of a portion of figure 11A in order to highlight some characteristics of the train of poles processed by the apparatus according to the invention;
- Figures 12, 13 and 14 diagrammatically show, respectively, a perspective view, a cross sectioned view and a plant view, of an intermediate support member according to the invention.

### Detailed description of some exemplary embodiments of the invention

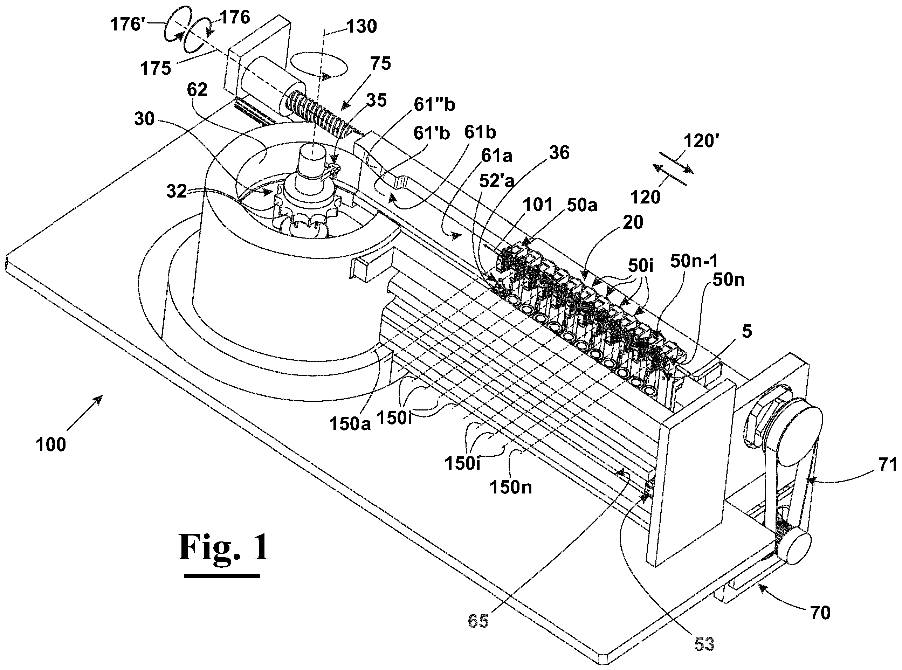

In the following pole members can be referred to as poles, for reasons of clarity. With reference to figure 1 an apparatus 100, according to the invention, for producing a stator, in particular an annular stator, of a dynamo-electric machine by assembling together a plurality of pole members 10 wound by a wire W forming respective coils B, comprises a first displacement device 20 configured to move a train of poles 5 along a rectilinear trajectory 101. In particular, the train of poles 5 comprises the plurality of pole members 10 positioned side by side along a predetermined rectilinear trajectory 101 and supported by a plurality of support members 50a-50n. In particular, the train of poles 5 comprises a first pole member 10a supported by a respective first support member 50a, a predetermined number of intermediate pole members 10i each supported by a respective support member 50i, and a last pole member 10n supported by a respective last support member 50n.

More particularly, the pole members 10a, 10i and 10n supported on the respective support members 50a, 50i and 50n, are positioned according to a predetermined starting spatial orientation during their movement carried out by a first displacement device 20 along the rectilinear trajectory 101. More precisely, as diagrammatically shown in figures 1, 2 and 5, each pole member 10a, 10i and 10n has a respective axis 150a, 150i and 150n, which is directed towards a first direction during the movement of the pole members 10a, 10i and 10n by the first displacement device 20 along the rectilinear trajectory 101.

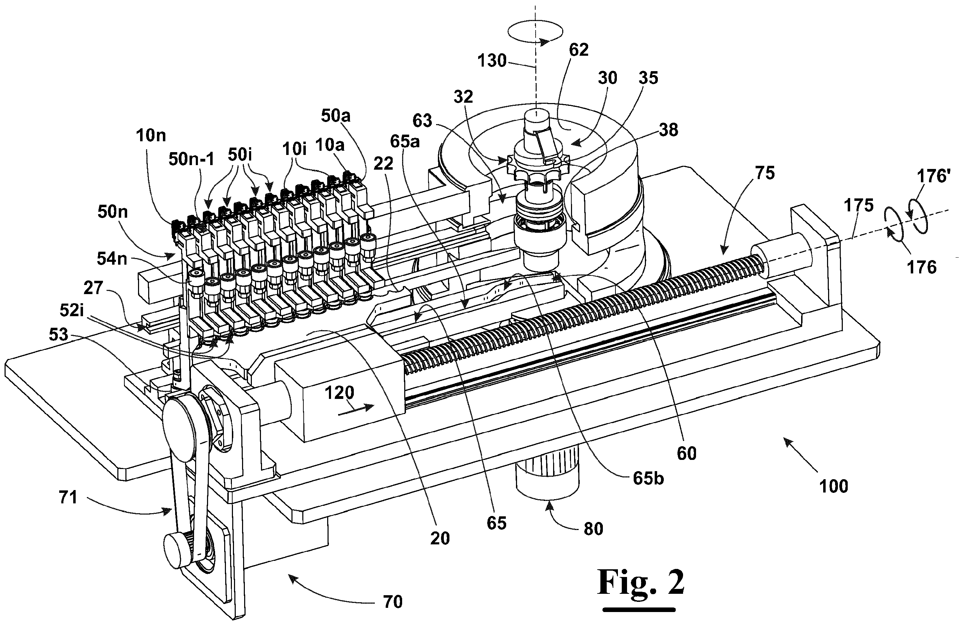

The first displacement device 20 can be operated by an endless screw 75 (see figures 1 and 2), which can be caused to rotate about its rotation axis 175 in a first rotation direction 176, or in a second opposite rotation direction 176', by a motor, for example an electric motor 90, in particular through a transmission belt 71, in order to move the first displacement device 20 and, therefore, the train of poles 5 in a first moving direction 120, or to move the first displacement device 20 back to a load position for loading a new train of poles (not shown in the figures).

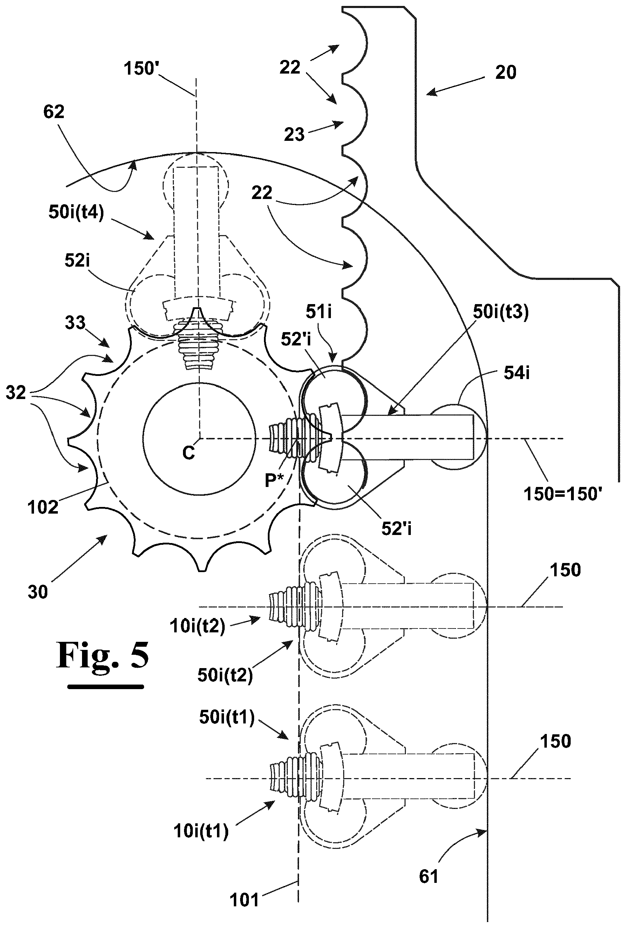

The apparatus 100, furthermore, comprises a second displacement device 30 (see for example figures 1, 2 and 5), which is configured to cause, at a predetermined passage position P* (see for example figure 5) the first pole member 10a and the intermediate pole members 10i supported by respective support members 50a and 50i, at a time to move from the aforementioned predetermined rectilinear trajectory 101 to a predetermined circular trajectory 102 having a centre C. In particular, when all the pole members 10a-10n of the train of poles 5 are positioned along the circular trajectory 102 a required annular shape is achieved. More in detail, the second displacement device 30 is configured to move the train of poles 5 along the circular trajectory 102 maintaining the poles 10 radially oriented with respect to the centre C, i.e. with the respective axes 150a and 150i of the pole members, that is maintained directed towards centre C (see for example figure 5). According to an aspect of the invention, not shown in the figures for reasons of clarity, after all the poles 10a-10n of the train of poles 5 have been positioned along the circular trajectory 102, they are radially pressed in order to achieve a final shape of the annular stator to be assembled.

In particular, with reference, for example, to figure 5, at the predetermined passage position P*, the predetermined starting spatial orientation of each pole member 10a, 10i and 10n coincides with a radial direction with respect to the centre C of the circular trajectory 102 (see respective longitudinal axis 150a, 150i and 150n directed towards centre C at the passage position P*). In figure 5, for reasons of explanation, only a support element 50i is shown in different instants, in particular 4 different instants (t1,t2,t3,t4). More in detail, as shown in figure 5, during the movement of the pole members 10i along the rectilinear trajectory 101, its longitudinal axis 150i (instants t1 and t2) is positioned according to the starting spatial orientation in particular orthogonal to the rectilinear trajectory 101. However, when the support member 50i arrives at passage position P* (instant t3) the spatial orientation of longitudinal axis 150i coincides with the radial direction 150' directed towards centre C of the circular trajectory 102, and continues to remain radially oriented (instant t4) with axis 150' directed towards centre C during the movement of the pole members 50i along the circular trajectory 102.

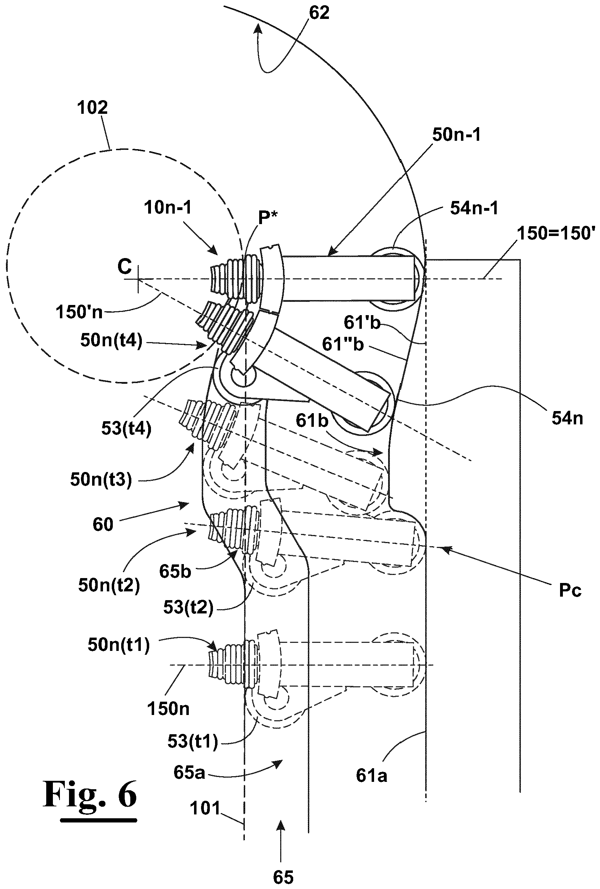

According to the invention, and diagrammatically illustrated in the sequence of figure 6, the apparatus 100 comprises an additional device 60 for changing the spatial orientation of the last pole member 10n starting from a point of the rectilinear trajectory 101 positioned upstream of passage position P*. In particular, in figure 6, for reasons of explanation, only the last pole member 10n, which is supported by the last support member 50n, is shown in different instants, in particular 4 different instants (t1,t2,t3,t4) until it is positioned adjacent to the previous pole member 10n-1 supported by support member 50n-1.

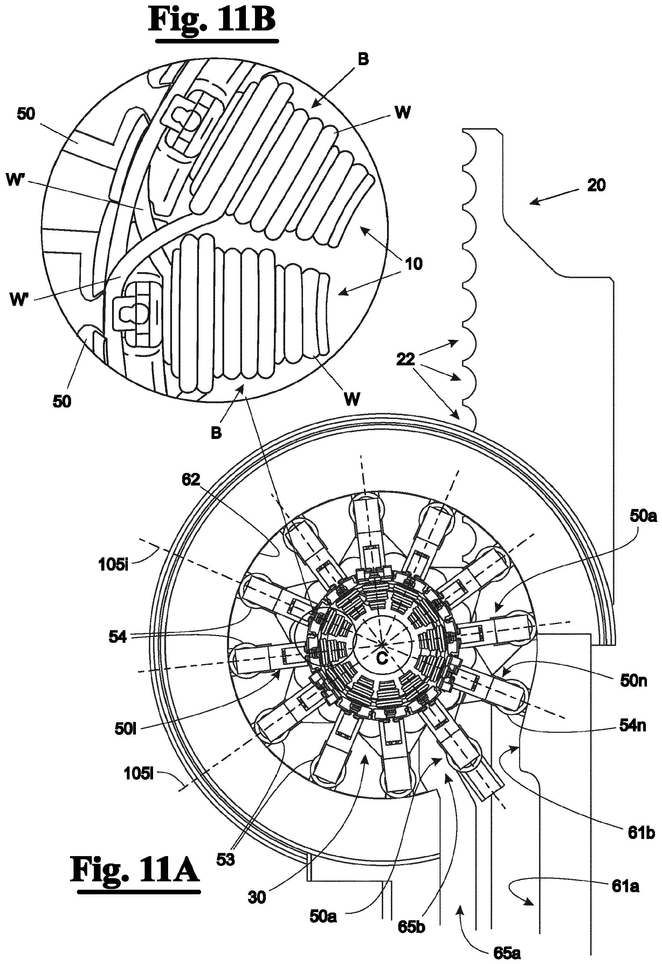

More precisely, with reference to figure 6, the last support member 50n is moved to change the predetermined starting spatial orientation of the last pole member 10n (instant t1) in which its longitudinal axis is originally positioned in the first spatial orientation to a final spatial orientation (instant t4) in which the last pole member 10n is radially oriented with the respective longitudinal axis 150n directed towards the centre C of the circular trajectory 102. In this way, it is possible to close the train of poles 5, in particular by positioning all the pole members 10a, 10i and 10n supported by respective support members 50a, 50 and 50n on the circular trajectory 102 (see figure 11).

More in detail, starting from the predetermined starting spatial orientation of the last pole member 10n in which its longitudinal axis 150n is directed along the first spatial orientation (instant t1), the device 60 for changing gradually causes the spatial orientation of the last pole member 10n to start changing when it reaches a changing position Pc (see figure 6) along the rectilinear trajectory 101 (instants t2 and t3) up to be radially oriented with respect to centre C (instant t4) and all the pole members 10a-10n are positioned along the circular trajectory 102.

Therefore, the spatial orientation of the last pole member 10n has undergone a sequence of changes that is different from those of the first and the intermediate pole members 10a and 10i to be positioned on the circular trajectory 102. This is particularly necessary to cause the last pole member 10n to be positioned without unwanted interference amongst the first pole member 10a and the last intermediate pole member 10n-1, which precedes the last pole member 10n in the train of pole members 5, on the circular trajectory 102 around centre C that has been chosen.

In this way, the circular trajectory 102 for assembly all the pole members can be chosen in order to have a diameter that is large enough to allow all the pole members 10a, 10i and 10n of the train of poles 5 to be positioned on it one adjacent to another, but to be, at the same time, as small as possible in order to avoid that the pole members 10a, 10i and 10n can move from the correct relative position from each other during assembly operations, in particular when the assembled pole members 10a, 10i and 10n are radially pressed in order to achieve the final shape of the annular stator to be obtained as anticipated above.

According to a possible embodiment of the invention, the first displacement device 20 (see for example figures 2 and 5) comprises a first plurality of engagement seats 22 positioned side by side and according to a direction parallel to the rectilinear trajectory 101 along which the train of poles 5 is moved by the first displacement device 20.

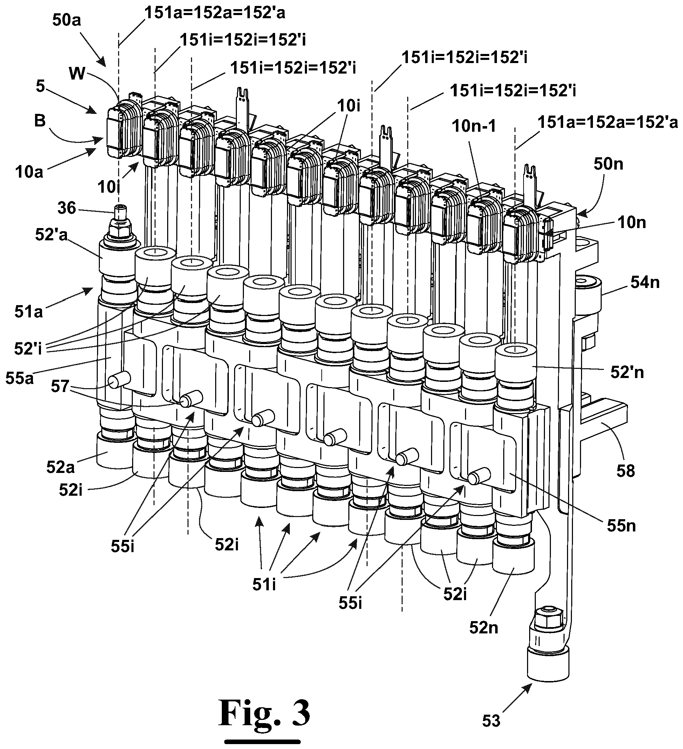

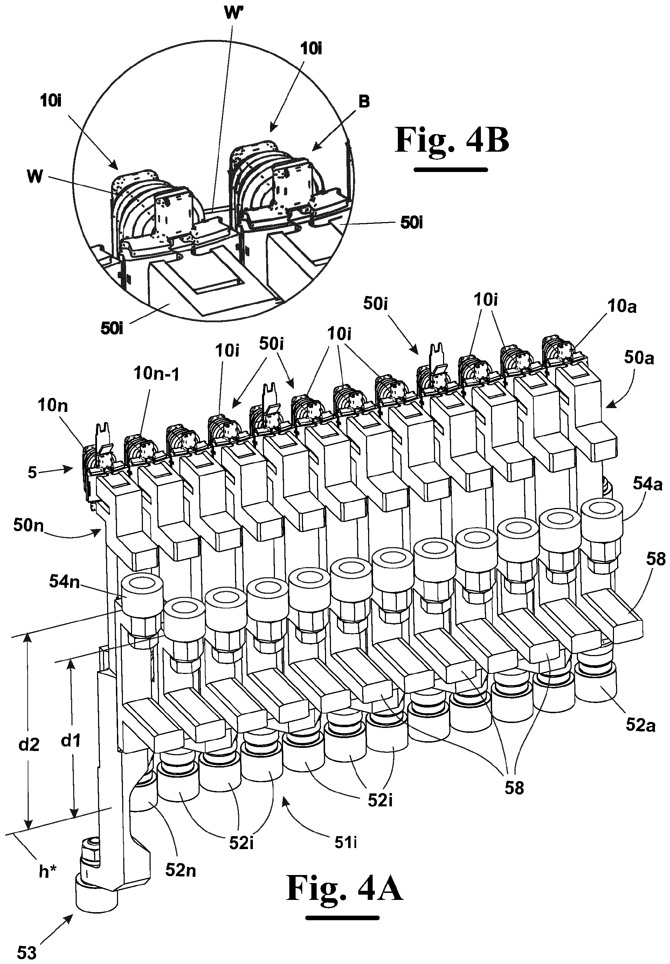

In particular, as shown in detail in figures 3 and 4, according to a preferred embodiment of the invention, the first support member 50a, the intermediate support members 50i and the last support member 50n are provided with respective engagement portions 55a, 55i, 55n. These are arranged to engage with the engagement portion of the adjacent support member 50i-50n forming a chain of support members. More in particular, each support member 50 of the chain of support members is arranged to engage with the adjacent support member 50 free to rotate about a rotation axis 155a, 155i and 155n.

More precisely, a plurality of engagement members 51a, 51i, 51n, are provided for engaging each engagement portion 55a, 55i and 55n of each support member 50a, 50i, and 50n with the engagement portion 55a, 55i, 55n of the adjacent support member 50a, 50i, 50n. More in detail, the engagement portions 55a, 55i and 55n and the engagement members 51a, 51i and 51n are configured in such a way that each support member 50a, 50i, and 50n is arranged to engage with the adjacent support member 50a, 50i, and 50n free to rotate around a respective rotation axis 151a, 151i and 151n (see figure 3).

According to an embodiment of the invention diagrammatically shown for example in figure 5, each engagement member 51a, 51i and 51n comprises a first engagement portion 52a, 52i and 52n arranged to engage with a respective engagement seat 22of the first displacement device 20 (see for example figure 5). In this way, the chain of support members 50a-50n can be moved by the first displacement device 20 in order to move the train of poles 5 along the rectilinear trajectory 101 in a very accurate way, in particular maintaining each pole member 10a, 10i and 10n at a predetermined distance from an adjacent pole member 10a, 10i and 10n and oriented according to the starting spatial orientation.

According to an advantageous embodiment of the invention, the first engagement portions 52a, 52i and 52n can comprise first rollers, arranged to be free to rotate about respective rotation axes 152a, 152i, 152n. In this case, each first engagement seat 22 of the first displacement device 20 can be circular-shaped and provided with a respective opening 23 (see for example figure 5) through which a respective first engagement portion 52a, 52n and 52i can enter/or exit the respective first engagement seat 22 to be engaged or disengaged.

Advantageously, in order to stabilize the movement of the support members 50a, 50n and 50i during their movement by the first displacement device 20, in particular avoiding unwanted tilting, at least a part of the support members 50a, 50i and 50n can be provided with first stabilization members 57 (see figure 3), for example stabilizing pins 57. In particular, the stabilizing pins 57 can be arranged to move into a rectilinear groove 27 that is foreseen parallel to the rectilinear trajectory 101 (see figures 2 and 3) . Advantageously, during their movement by the second displacement device 30 the stabilizing pins 57 can be arranged to move into a circular groove, not shown in the figures for clarity, that is foreseen coaxial to the circular trajectory 102.

For example, the first stabilizing pins 57 can protrude from the support members 50a, 50i and 50n at the opposite side of the first displacement device 20.

As diagrammatically shown for example in figures 1 2 and 5, the second displacement device 30 can be provided with a second plurality of engagement seats 32. More in detail, the engagement members 51a, 51i and 51n can provide respective second engagement portions 52'a, 52'i and 52'n (see also figure 3) arranged to engage respective engagement seats 32 of the second plurality of engagement seats 32 of the displacement device 30 in order to move the respective pole members 10a, 10i and 10n along the circular trajectory 102. More in detail, the first engagement portions 52a, 52i and 52n, and the second engagement portions 52'a, 52'i and 52'n are arranged on respective planes parallel with each other. As shown in figure 3, the rotation axes 151a, 151i and 151i of the engagement members 51a, 51i and 51n preferably coincides with the rotation axes 152a, 152i and 152i of the first engagement portions and with the rotation axes 152'a, 152'i and 152'i of the second engagement portions, i.e. 151a=152a=152'a, 151i=152i=152'i and 151n=152n=152'n.

Therefore, the first and the second displacement devices 20 and 30 are configured to engage the support members 50a, 50i and 50n at respective planes parallel with each other. In this way, it is possible to avoid any interference between the first and the second displacement devices 20 and 30, in particular at the passage position P*.

In particular, the second displacement device 30 is provided with a hook-engagement member 35 (see for example figure 1) which engages a pin portion 36 (see figures 1 and 3) of the first support member 50a starting from the predetermined passage position P* when the second engagement portion 52'a of the first support member 50a engages a respective second engagement seat 32 of the second displacement device 30.

According to an advantageous embodiment of the invention, the second engagement portions 52'a, 52'n and 52'i can comprise second engagement rollers configured to be free to rotate about respective rotation axes 152'a, 152'i and 152'n as shown in figure 3. In this case, each second engagement seat 32 of the second displacement device 30 can be circular-shaped and provided with a respective opening 33 through which a respective second engagement portion 52'a, 52'i and 52'n can enter/or exit the respective second engagement seat 32 (see for example figure 5).

According to an embodiment of the invention diagrammatically shown in figures 3 and 4, the first engagement portion 52a, 52i and 52n and the second engagement portion 52'a, 52'i and 52'n of the same engagement member 51a, 51i and 51n can be coaxial one another and positioned at the same side of the support member 50a, 50i and 50n, but at different heights. More in detail, the first and second displacement devices 20 and 30 are synchronized one another in such a way that at the passage position P* the openings 23 and 33 respectively of a first and a second engagement seats 22 and 32 face each other even though at different heights (see figure 5). In this way, when a support member 50a, 50i, and 50n moved by the first displacement device 20 reaches the passage position P*, the second engagement portion 52'a, 52'i and 52'n of the respective support member 50a, 50i and 50n moves into a respective engagement seat 32 of the second displacement device 30 in order to move the respective pole member 10a, 10i and 10n along the circular trajectory 102, and the first engagement portion 52a, 52i and 52n leaves the first engagement seat 22 to be disengaged from the first displacement device 20.

In particular, the second displacement device 30 can be a rotating crown, or carousel, peripherally provided with the second plurality of engagement seats 32. More in particular, the second displacement device 30 can be caused to rotate about a rotation axis 130 passing through the centre C by a driving group 80 (shown in figure 2), in particular comprising an electric motor, in order to cause the first support member 50a and the intermediate support members 50i engaged at respective engagement seats 32 to be moved along a circular direction coaxial to the circular trajectory 102 along which the respective pole members 10a, 10i and 10n are moved.

As diagrammatically shown in figure 4, at least a part of the support members 50 can be provided with respective second stabilization members 58 (shown in figures 3 and 4), in particular arranged at the opposite side of the first stabilization members 57 with respect to the support members 50. In particular, during the movement of the train of poles 5 along the rectilinear trajectory 101 the second stabilization members 58 can be arranged to move into a rectilinear groove, not shown in the figures for clarity, in particular provided with a rectilinear abutment surface. Advantageously, during the movement of the train of poles 5 along the circular trajectory 102 the second stabilization members 58 can be arranged to move into a circular groove 39, in particular against a rectilinear abutment surface, in order to stabilize the movement of the support members 50, in particular to avoid tilting (see figure 2).

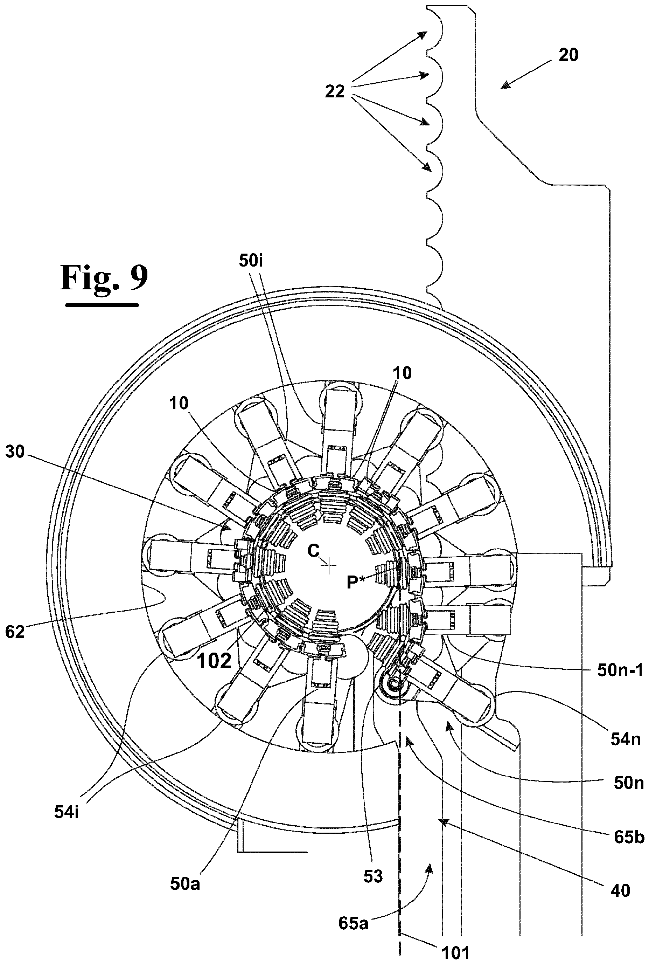

According to a preferred embodiment of the invention, the device 60 (see for example figures 2, 6 and 9) for changing the spatial orientation of the last support member 50n can provide a guide member 65, in particular a guide groove 65, and the last support member 50n can be provided with a third engagement portion 53 (see for example figures 2, 3 and 4) arranged to engage with the guide member 65. Advantageously, the third engagement portion 53 is positioned at a different height, in particular at a lower height, with respect to the first engagement portions 52a, 52i and 52n of the engagement members 51a, 51i and 51n.

In particular, the guide member 65 (see for example figure 1) comprises a first guide portion 65a parallel to the rectilinear trajectory 101, and a second guide portion 65b, which is shaped, in particular cam-shaped, in such a way that the movement of the first displacement device 20 along the moving direction 120 carried out by the second displacement device 20 causes, when the third engagement portion 53 moves along the second guide portion 65b, the last support member 50n to rotate around the rotation axis 151n of the respective first engagement portion 51n changing the spatial orientation of the longitudinal axis 150n of the last pole member 10n from the predetermined starting spatial orientation to a final spatial orientation in which it is radially oriented with respect to the circular trajectory 102.

In particular (with reference to figures 3 and 4), the support members 50a, 50i and 50n can be provided with respective contact portions 54. More in particular, the contact portions 54 of the first and intermediate support members 50a and 50i are positioned at a first distance d1 from a reference height h*, whilst the contact portion 54n of the last support member 50n is positioned at a second distance d2 from the reference height h* different from the first distance d1, for example the second distance d2 can be greater than the first distance d1.

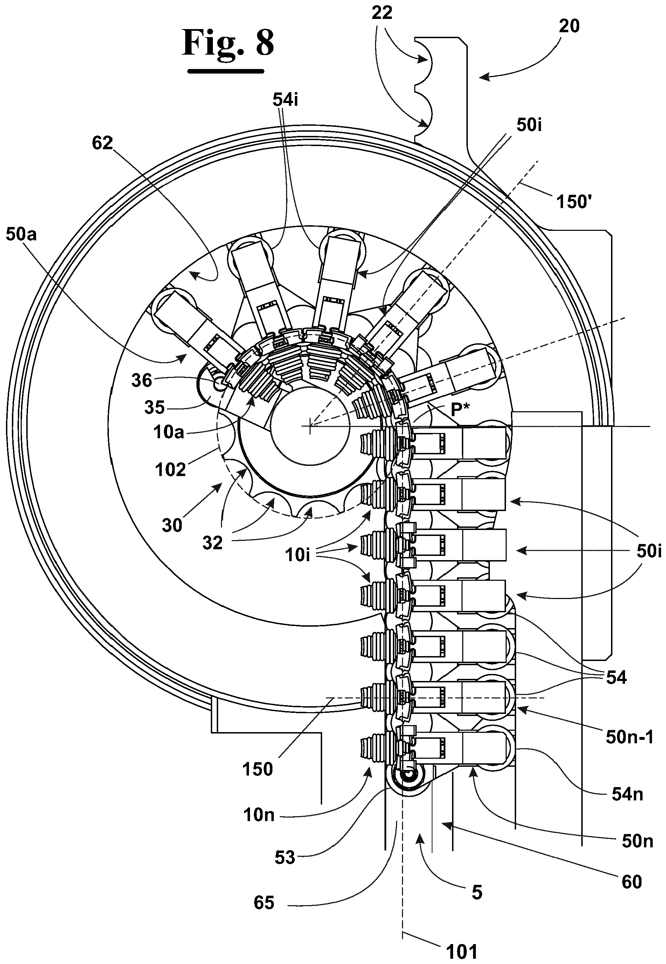

More in particular, a first stabilization wall 61 (see figures 1, 5, 6 and 8) can be provided comprising a first portion 61a parallel to the rectilinear trajectory 101 along which the contact portions 54a, 54i, and 54n of the first, intermediate, and last support members 50a, 50i, and 50n are arranged to move during a first portion of the movement of the first displacement device 20 along the moving direction 120. Furthermore, the first stabilization wall 61 (see figure 6) comprises a second portion 61b comprising a first part 61'b arranged at the first distance d1 from the reference height h* and parallel to the rectilinear trajectory 101 along which the contact portions 54a, and 54i of the first and intermediate last support members 50a, and 50i are arranged to move during a second portion of the movement of the first displacement device 20 along the moving direction 120 up to reaching the passage position P*. In addition, the second portion 61b of the first stabilization wall 61 comprises a second part 61"b arranged at the second distance d2 from the reference height h*. In particular, the second part 61"b is shaped substantially as the second portion 65b of the guide member 65. In this way, during the second portion of the movement of the first displacement device 20 along the moving direction 120, the contact portion 54n of the last support member 50n moves along the second part 61"b of the second portion 61b, and the third engagement portion 53 of the last support member 50n moves along the second guide portion 65b of the guide member 65.

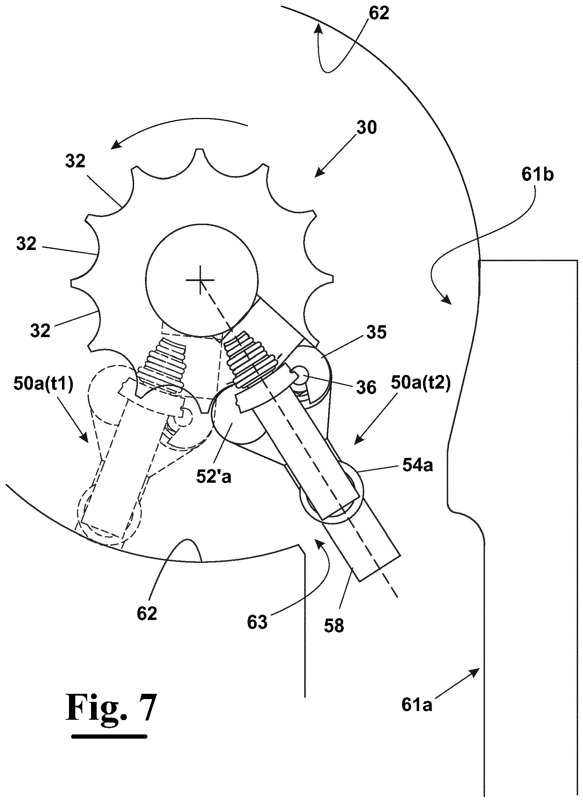

In particular, when the second engagement portions 52'a, 52'i and 52'n engage with the second engagement seats 32 of the second displacement device 30 at passage position P*, the contact portions 54a, 54i and 54n moves along a second stabilization wall 62, which has a circular shape concentric to the circular trajectory 102. In particular, the second stabilization wall 62 is positioned at the opposite side of the second displacement device 30 with respect to the support members 50 (as shown in figure 2). As diagrammatically shown for example in figures 5 and 7, the second stabilization wall 62 interrupts at a predetermined position of the circular trajectory 102 forming an aperture 63. In particular, the aperture 63 allows the support members 50a and 50i moved along the rectilinear trajectory 101 to be positioned at the passage position P*. In fact, the first and the second displacement devices 20 and 30 are configured to move the support members 50 on the same plane, respectively along the rectilinear and circular trajectories 101 and 102. Furthermore, the aperture 63 allows also to change the spatial orientation of the last support member 50n.

When the first pole member 10a supported by the first support member 50a, during its movement along the circular trajectory 102, arrives at the aperture 63, in order to be able to continue to be moved on the circular trajectory 102, it is guided by the hook-engagement member 35, even though the contact member 54a of the first support member 50a no longer moves along the second stabilization wall 62, and the second stabilization member 58 is no longer arranged in the circular groove 39. This is diagrammatically illustrated in figure 7 where only the first support member 50a in two different instants (t1 and t2) is shown for reasons of explanation.

In particular, according to an aspect of the invention diagrammatically shown in figures 4B and 11B, each pole 10a, 10i and 10n of the train of poles 5 can be constrained to the adjacent pole member 10a, 10i and 10n by at least a connection lead W' of the wire W having a predetermined length. Therefore, it is fundamental, in this case, to accurately position each pole member 10a, 10i and 10n with respect to the adjacent pole member 10a, 10i and 10n during their movements both along the rectilinear trajectory 101 and the circular trajectory 102, in order to avoid breaking, or other damage to the wire W and or to the connection leads W' connecting the poles. In this case the circular trajectory 102 for assembly of the poles 10a, 10i and 10n around centre C can be selected to suit the placement of the connection leads without causing the latter to be overlength or too short and become stretched during assembly. More in detail, circular trajectory 102 can be selected where pole members are assembled like has been described in the foregoing with reference to the positioning of the pole members of the train of poles 5 and, in particular, the last pole member 10n, on the circular trajectory 102.

In the figures from 12 to 14 an exemplary embodiment of an intermediate support member 50i is diagrammatically shown in a perspective, cross-sectional, and plan view, respectively.

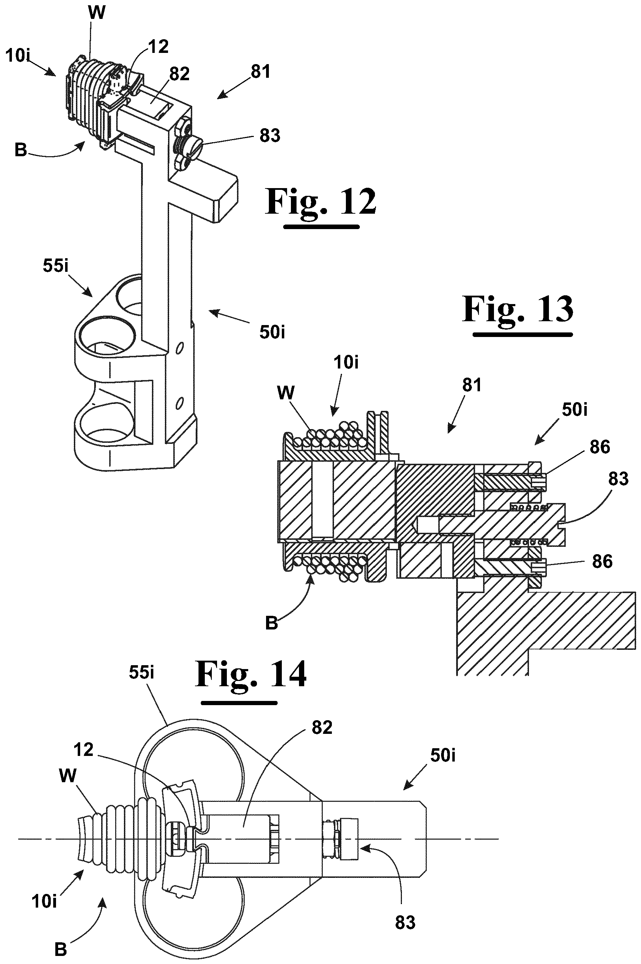

As diagrammatically shown, in particular, in figures 12, 13 and 14, each support member 50a, 50i and 50n can be provide with an holding device 81. More in particular, the holding device 81 can comprise an holding member 82 removably engaged in a slot 12 of the pole 10 (see figure 14). The holding member 82 is fixed to spring loaded screw 83, which draws holding member 82 against pins 86 (as shown in figures 13 and 14) for fixing the pole 10 to the support member 50i thus assuring a correct positioning of the pole members 10i along the rectilinear and circular trajectories 101 and 102, when the support member 50i is moved by the first and second displacement devices 20 and 30, respectively.

The foregoing description exemplary embodiments of the invention will so fully reveal the invention according to the conceptual point of view, so that others, by applying current knowledge, will be able to modify and/or adapt for various applications such embodiment without further research and without parting from the invention, and, accordingly, it is therefore to be understood that such adaptations and modifications will have to be considered as equivalent to the specific embodiments. The means and the materials to realize the different functions described herein could have a different nature without, for this reason, departing from the field of the invention. It is to be understood that the phraseology or terminology that is employed herein is for the purpose of description and not of limitation.

## Claims

1. Method for producing a stator of a dynamo-electric machine by assembling together a plurality of pole members (10a,10i,10n) wound with wire (W) forming respective coils (B), said method being **characterized in that** it comprises the steps of:
- moving along a predetermined rectilinear trajectory (101) a train of poles (5) comprising said plurality of pole members (10a,10i,10n) positioned side by side, said train of poles (5) comprising a first pole member (10a), a last pole member (10n), and a predetermined number of intermediate pole members (10i) positioned between said first and said last pole members (10a, 10n), during said step of moving along the predetermined rectilinear trajectory (101) each pole member (10a,10i,10n) being arranged with a respective longitudinal axis (150a,150i,150n) positioned according to a predetermined starting spatial orientation;
- passing at a predetermined passage position (P*) the first pole member (10a) and an intermediate pole member (10i) from the rectilinear trajectory (101) to a circular trajectory (102) having a centre (C), at said predetermined passage position (P*) said longitudinal axes (150a,150i) of the first pole member (10a) and the intermediate pole members (10i) being directed towards the centre (C) of the circular trajectory (102);
- moving the first pole member (10a) and the intermediate pole members (10i) along said circular trajectory (102), during said step of moving along the circular trajectory (102), the longitudinal axes (150a,150i) of the first pole member (10a) and the intermediate pole members (10i) being directed towards the centre (C) of said circular trajectory (102);
- closing said train of poles (5) positioning all the pole members (10a,10i,10n) of said train of poles (5) along said circular trajectory (102) with said last pole member (10n) adjacent to said first pole member (10a) and to the intermediate pole member (10n-1) of the train of poles (5) which precedes the last pole member (10n); said step of closing being carried out by changing, starting from a change point (Pc) of said rectilinear trajectory (101) positioned upstream of said passage position (P*), the spatial orientation of the last pole (10n) of said train of poles (5) from said predetermined starting spatial orientation (150n) to a final spatial orientation in which it is radially oriented with respect to the centre (C) of the circular trajectory (102).

2. Method according to claim 1 wherein the adjacent pole members of the train of poles are connected by connection leads (W').

3. Method according to claim 1, or 2, wherein a plurality of support members (50a,50i,50n) is, furthermore, provided arranged to support respective pole members (10a,10i,10n) of said plurality of pole members, said plurality of support members (50a,50i,50n) comprising a first support member (50a), a last support member (50n) and a predetermined number of intermediate support members (50i) positioned between the first and the last support members (50a,50n), wherein each support member (50a,50i,50n) comprises a respective engagement portion (55a,55i,55n) at which each support member (50a,50i,50n) is arranged to engage by a respective engagement member (51a,51i,51n) with the adjacent support member (50a,50i,50n) in order to be free to rotate about a rotation axis (151a, 151i, 151n) in such a way to form a chain of support members.

4. Method according to claim 3 wherein during said step of moving along said rectilinear trajectory (101) the first, the intermediate, and the last support members (50a,50i,50n) are engaged at first engagement portions (52a,52i,52n) of said respective engagement members (51a,51i,51n) to a first displacement device (20) arranged to move along a moving direction (120) parallel to said rectilinear trajectory (101).

5. Method according to claim 3, or 4 wherein at the predetermined passage position (P*) and during the step of moving along said circular trajectory (102), said first, said intermediate, and said last support members (50a,50i,50n) are engaged at second engagement portions (52'a,52'i,52'n) of respective engagement members (51a,51i,51n) to a second displacement device (30) arranged to cause said train of poles (5) to move along said predetermined circular trajectory (102).

6. Method according to claim 5, wherein during the step of moving along the circular trajectory (102) each support member (50a,50i,50n) is rotated by the second displacement device (30) around a rotation axis (130) passing through the centre (C) of said circular trajectory (102) maintaining the longitudinal axes (150a,150i,150n) of the pole members (10a,10i,10n) radially oriented with respect to the centre (C) of the circular trajectory (102).

7. Method according to any claim from 3 to 6, wherein said step of changing the spatial orientation of the last pole member (10n) is carried out by a device (60) for changing the spatial orientation arranged to engage the last support member (50n) at a third engagement portion (53) with a guide member (65) comprising a first guide portion (65a) parallel to said rectilinear trajectory (101), and a second guide portion (65b) shaped in such a way to cause the last support member (50n) to rotate around the rotation axis (151n) of the respective first engagement portion (51n) changing the spatial orientation of the longitudinal axis (150n) of the last pole member (10n) from the predetermined starting spatial orientation to a final spatial orientation in which it is radially oriented with respect to the circular trajectory (102).

8. Method according to any claim from 3 to 7, wherein during the moving step of the pole members along the circular trajectory (102), a contact portion (54a,54i,54n) of each support member (50a,50i,50n) is arranged to move along a second stabilization wall (62) having a curvilinear shape and positioned at the opposite side of said second displacement device (30), said second stabilization wall (62) interrupting at a predetermined angular position of said circular trajectory (102) in order not to obstruct said the step of changing the spatial orientation of the longitudinal axis (150n) of the last pole member (10n).

9. Apparatus (100) for producing a stator of a dynamo-electric machine by assembling together a plurality of pole members (10a,10i,10n) wound by a wire (W) forming respective coils (B), said apparatus (100) being **characterized in that** it comprises:
- a first displacement device (20) configured to move along a predetermined rectilinear trajectory (101) a train of poles (5) comprising said plurality of pole members (10a,10i,10n) positioned side by side, said train of poles (5) comprising a first pole member (10a), a last pole member (10n), and a predetermined number of intermediate pole members (10i) positioned between said first and said last pole members (10a,10n), said first displacement device (20) configured to move said plurality of pole members (10a,10i,10n) maintaining respective longitudinal axes (150a,150i,150n) positioned according to a predetermined starting spatial orientation;
- a second displacement device (30) configured to cause, at a predetermined passage position (P*), the first pole member (10a) and the plurality of intermediate pole members (10i) at a time to move from said predetermined rectilinear trajectory (101) to a predetermined circular trajectory (102) having a centre (C), wherein at the predetermined passage position (P*) the predetermined starting spatial orientation of the longitudinal axes (150a,150i) of the first pole member and the intermediate pole members (10a,10i) coincides with a radial direction with respect to the centre (C) of the circular trajectory (102), and wherein said second displacement device (30) is configured to move said plurality of pole members (10a,10i,10n) along the circular trajectory (102) maintaining the longitudinal axes (150a,150i,150n) of said pole members (10a,10i,10n) radially oriented with respect to the centre (C);
- a device (60) for changing, starting from a change point (Pc) positioned upstream of said passage position (P*), the spatial orientation of the last pole member (10n) from the predetermined starting spatial orientation to a final spatial orientation in which the longitudinal axis of the last pole member (10n) is radially oriented with respect to the centre (C) of the circular trajectory in such a way that it is possible to close the train of poles (5) by positioning the last pole member (10n) adjacent to the first pole member (50a) and to the intermediate pole member (10n-1) of the train of poles (5) which precedes the last pole member (10n).

10. Apparatus according to claim 9 wherein a plurality of support members (50a,50i,50n) is, furthermore, provided arranged to support respective pole members (10a,10i,10n) of said plurality of pole members, said plurality of support members (50a,50i,50n) comprising a first support member (50a), a last support member (50n) and a predetermined number of intermediate support members (50i) positioned between the first and the last support members (50a,50n), and wherein each support member (50a,50i,50n) comprises a respective engagement portion (55a,55i,55n) at which each support member (50a,50i,50n) is arranged to engage by a respective engagement member (51a,51i,51n) with the adjacent support member (50a,50i,50n) in order to be free to rotate about a rotation axis (151a,151i,151n) in such a way to form a chain of support members.

11. Apparatus according to claim 10 wherein the first displacement device (20) is provided with a first plurality of engagement seats (22), and wherein said engagement members (51a,51i,51n) of said first, intermediate and last support members (50a,50i,50n) are provided with respective first engagement portions (52a,52i,52n) arranged to engage with respective engagement seats (22) of said first plurality of engagement seats (22) to move said respective pole members (10a,10i,10n) along said rectilinear trajectory (101).

12. Apparatus according to claim 11 wherein said second displacement device (30) is provided with a second plurality of engagement seats (32) and wherein said engagement members (51a,51i,51n) of said first, intermediate and last support members (50a,50i,50n) are provided with respective second engagement portions (52'a,52'i,52'n) arranged to engage with respective engagement seats (32) of said second plurality of engagement seats (32) to move said respective pole members (10a,10i,10n) along said circular trajectory (102) .

13. Apparatus according to any claim from 10 to 12 wherein said second displacement device (30) is provided with a hook-engagement member (35) configured to engage a pin portion (36) of the first support member (50a) starting from the predetermined passage position (P*) when the second engagement portion (52'a) of the first support member (50a) is engaged with a respective second engagement seat (32) of the second displacement device (30) .

14. Apparatus according to claim 12, or 13 wherein said second displacement device (30) is a rotating crown peripherally provided with the second plurality of engagement seats (32), said second displacement device (30) being configured to cause said plurality of support members (50a,50i,50n) to rotate around a rotation axis (130) passing through said centre (C) of said circular trajectory (102).

15. Apparatus according to claims 11 and 12 wherein said first portions (52a,52i,52n) and said second portions (52'a,52'i,52'n) of said engagement members (51a,51i,51n) are arranged on respective planes parallel with each other.

16. Apparatus according to any claim from 11 to 15, wherein said device (60) for changing the spatial orientation of the last pole member (10n) provides a guide member (65) and wherein said last support member (50n) is provided with a third engagement portion (53) arranged to engage with said guide member (65), said guide member (65) comprising a first guide portion (65a) parallel to said rectilinear trajectory (101), and a second guide portion (65b) shaped in such a way to cause the last support member (50n) to rotate around the rotation axis (151n) of the respective first engagement portion (51n) changing the spatial orientation of the longitudinal axis (150n) of the last pole member (10n) from the predetermined starting spatial orientation to a final spatial orientation in which it is radially oriented with respect to the circular trajectory (102).

17. Apparatus according to any claim from 11 to 16, wherein said support members (50a,50i,50n) are provided with respective contact portions (54a,54i,54n) arranged to move along a second stabilization wall (62) having a circular shape concentric to said circular trajectory (102) during said movement by said second displacement device (30), said second stabilization wall (62) interrupting at a predetermined angular position of said circular trajectory (102) in order not to obstruct said the step of changing the spatial orientation of the longitudinal axis (150n) of the last pole member (10n).

18. Apparatus according to claim 17, wherein the contact portions (54a,54i,54n) of said first and intermediate support members (50a,50i) are positioned at a first distance (d1) from a reference height (h*), and wherein the contact portion (54n) of said last support member (50n) of said last pole (10n) is positioned at a second distance (d2) from said reference height (h*) different from said first distance (d1) and wherein a first stabilization wall (61) is, furthermore, provided comprising:
- a first portion (61a) parallel to the rectilinear trajectory (101) along which said contact portions (54a,54i,54n) of said first, intermediate, and last support members (50a,50i,50n) are arranged to move during a first portion of the movement of said first displacement device (20) along said moving direction (120);
- a second portion (61b) comprising:
- a first part (61'b) arranged at the first distance (d1) from said reference height (h*) and parallel to said rectilinear trajectory (101) along which said contact portions (54a,54i) of the first and intermediate last support members (50a,50i) are arranged to move during a second portion of the movement of said first displacement device (20) along said moving direction (120) up to reach the passage position (P*);
- a second part (61"b) arranged at the second distance (d2) from the reference height (h*) and shaped substantially as said second portion (65b) of the guide member (65), in such a way that that during the second portion of the movement of said first displacement device (20) along said moving direction (120), the contact portion (54n) of said last support member (50n) is arranged to move along the second part (61"b) of said second portion (61b), and the third engagement portion (53) of said last support member (50n) is arranged to move along said second guide portion (65b) of said guide member (65).
